# EUROPEAN PATENT APPLICATION

(11) **EP 3 431 782 A1**
(43) Date of publication of application: **23.01.2019**
(21) Application number: 18183325.2
(22) Date of filing: 13.07.2018
(51) Int. Cl.: F15B 15/14, F16J 15/56

(54) **CYLINDER-PISTON GROUP**

(30) Priority: 21.07.2017 IT 201700083272
(71) Applicant: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(57) **Abstract**

A cylinder-piston group (1) comprising: a cylinder (10) and a piston (30) slidably received in the cylinder (10), a stem (40) fixedly connected to the piston (30) and slidably received in an opening (45) of the cylinder (10), a scraping gasket (60), which is housed in a recess (65) formed in the cylinder (10) at the opening (45) and comprises two lips (90,110), a first lip (90) of which faces towards the inside of the cylinder (10) and a second lip (110) of which faces towards the outside of the cylinder (10), each of which sealably surrounds the stem (40) and is equipped with an end portion (95,115) in contact with the stem (40) along a cylindrical contact surface (100,120), where the contact surface (120) of the second lip (110) has a length, in the axial direction of the stem (40), comprised between 0.15 and 0.5 mm.

## Description

### TECHNICAL FIELD

The present invention concerns a cylinder-piston group, in particular a cylinder-piston group equipped with a scraping gasket.

### PRIOR ART

Generally, a cylinder-piston group comprises a cylinder, inside which a piston slides that divides said cylinder into two distinct chambers, and a stem fixedly connected to the piston and slidably received in an opening of the cylinder. By introducing a pressurised fluid, usually oil, into one of the two chambers of the cylinder it is possible to move the piston, and therefore the stem, in the desired direction.

At the opening in which the stem slides it is necessary to position a sealing gasket to prevent the pressurised fluid from coming out from the cylinder and external contaminating agents from being able to enter into the cylinder.

It is known that, when the stem translates towards the outside of the cylinder, a very small amount of oil always comes out from the cylinder, through the sealing gasket, in the form of a very thin film of oil clinging to the stem. However, such escaping of oil is not generally an actual loss since such a film of oil goes back into the cylinder with the stem going back through the sealing gasket when the stem translates towards the inside of the cylinder. However, in environments with particularly aggressive contaminating agents, like for example sand and mud, it also becomes necessary to install a scraping gasket arranged at the opening, outside of the sealing gasket.

The main purpose of the scraping gasket is to scrape the contaminating agents from the stem while it translates towards the inside of the cylinder.

A known problem of scraping gaskets is that they tend to also scrape the very thin film of oil that covers the stem from the cylinder, thus generating a loss of oil in the external environment.

A purpose of the present invention is to provide a scraping gasket that removes the contaminating agents from the stem, but allowing the film of oil to pass through it to go back inside the cylinder.

Another purpose is to achieve the aforementioned task in a simple, rational and low-cost solution.

These purposes are accomplished thanks to the characteristics of the invention given in the independent claim.

The dependent claims outline preferred and/or particularly advantageous aspects of the invention.

### SUMMARY OF THE INVENTION

The invention provides a cylinder-piston group comprising: a cylinder and a piston slidably received in the cylinder, a stem fixedly connected to the piston and slidably received in an opening of the cylinder, a scraping gasket, which is housed in a recess formed in the cylinder at the opening and comprises two lips, a first lip of which faces towards the inside of the cylinder and a second lip of which faces towards the outside of the cylinder, each of which sealably surrounds the stem and is equipped with an end portion in contact with the stem along a cylindrical contact surface, said scraping gasket being characterised in that the contact surface of the second lip has a length, in the axial direction of the stem, comprised between 0.15 mm and 0.50 mm. Thanks to such a solution, the scraping gasket is capable of scraping the contaminating agents from the surface of the stem when said stem translates towards the inside of the cylinder and, at the same time, ensures both the re-entry into the cylinder of the film of oil clinging to the portion of stem that came out from the cylinder and that a possible liquid in which the cylinder-piston group is at least partially immersed cannot enter inside the cylinder. An aspect of the invention according to which the second lip of the scraping gasket can be configured so as to exert a pressure on the contact surface comprised between 8 and 14 Mpa contributes to obtaining the aforementioned advantage.

According to another aspect of the invention, the second lip can be configured so as to exert on the contact surface a non-uniform pressure, the maximum value of which is localised in a segment closer to the axial end of the contact surface facing towards the inside of the cylinder with respect to the opposite axial end.

In this way, the second lip allows an efficient re-entry of the film of oil clinging to the portion of stem that comes out from the cylinder.

A further aspect of the invention foresees that the end portion of the second lip can comprise an annular surface adjacent to the contact surface and facing towards the outside, which has a rounded cross section profile.

In this way, the re-entry into the cylinder of the film of oil clinging to the portion of stem that comes out from the cylinder is further promoted. Advantageously, the rounded cross section profile can have a joining radius comprised between 0.02 and 0.15.mm

According to another aspect of the invention, the cylinder can comprise a step, arranged between the recess and the outside, equipped with a cylindrical surface concentric to the stem and in which the scraping gasket has an abutment surface adapted for contacting the cylindrical surface.

Thanks to such a solution, the scraping gasket effectively prevents the entry of polluting agents into the volume between the recess and the scraping gasket itself.

According to yet another aspect of the invention, the cylinder-piston group can comprise a step, arranged between the recess and the outside, equipped with a cylindrical surface concentric to the stem, and in which the scraping gasket has an abutment surface adapted for contacting the cylindrical surface of the step

In this way, the step is covered by the scraping gasket making it more difficult for polluting agents to enter between the step and the scraping gasket.

According to a further aspect of the invention, the cross section of the scraping gasket according to a plane perpendicular to the axis of the stem and passing through an end of the step facing towards the outside, can be a single circular crown.

In this way, the rigidity of the gasket increases, consequently making it more difficult for the scraping gasket to be expelled from its recess when, in anomalous operating conditions, high overpressures are generated inside the cylinder that push the gasket towards the outside, making it rotate about the step until it comes out from the seat.

According to yet another aspect of the invention, the end portion of the first lip can comprise an annular surface adjacent to the contact surface and facing towards the inside of the cylinder, which has a substantially rectilinear cross section profile that forms an angle comprised between 40° and 80°, preferably 60°, with the longitudinal axis of the stem.

Thanks to this solution the scraping gasket decreases the height of the film of oil that comes out with the stem.

A further aspect of the invention provides that the annular surface of the first lip can be made through turning.

Such a technical feature makes it possible to make said annular surface with greater precision, said surface consequently having greater efficiency in decreasing the height of the film of oil with respect to the case in which it is not formed by turning.

Another aspect of the invention provides that the contact surface with stem of the first lip can have a length, in the axial direction of the stem, comprised between 0.10 and 0.60 mm and in which said first lip is configured so as to exert a pressure on the contact surface comprised between 8 and 14 MPa.

In this aspect, the height of the film of oil exiting from the cylinder is substantially reduced.

According to a yet further aspect of the invention, the scraping gasket can comprise a third lip equipped with an end arranged in contact with a bottom wall of the housing recess.

In this way, the impermeability, i.e. the resistance to the entry of liquids through the scraping gasket, of the cylinder-piston is improved.

Another aspect of the invention according to which the scraping gasket can comprise a fourth lip equipped with an end arranged in contact with a surface of the step facing towards the inside of the cylinder contributes to the same advantage.

Furthermore, the scraping gasket can comprise a fifth lip, which comprises an end portion that contacts an outer surface of the step and that is joined through a connection surface to the end portion of the second lip.

In this way, as well as further improving the impermeability of the cylinder-piston, the second lip is more rigid and therefore has less of a tendency to lift from the stem due to an increased pressure inside the cylinder, thus maintaining the correct contact pressure on the stem for a wide range of pressures of the cylinder.

### BRIEF DESCRIPTION OF THE DRAWINGS

Further characteristics and advantages of the invention will become clearer from reading the following description provided as an example and not for limiting purposes, with the help of the figures illustrated in the attached tables.
Figure 1 is a section view of a cylinder-piston group according to the invention.
Figure 2 is an enlargement of the section II of figure 1

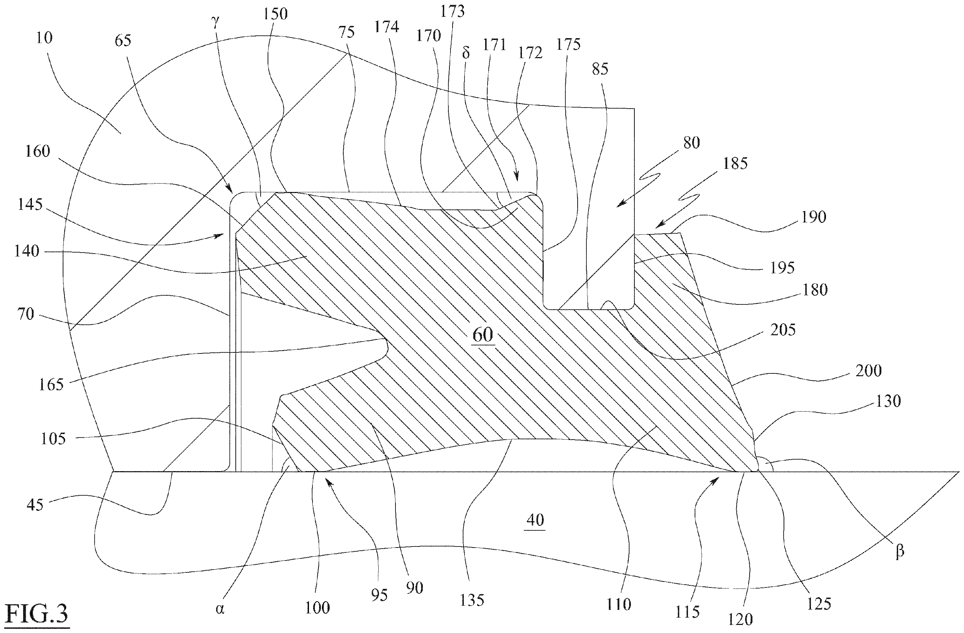

Figure 3 is an enlargement of a scraping gasket of the cylinder-piston group in figures 1 and 2.

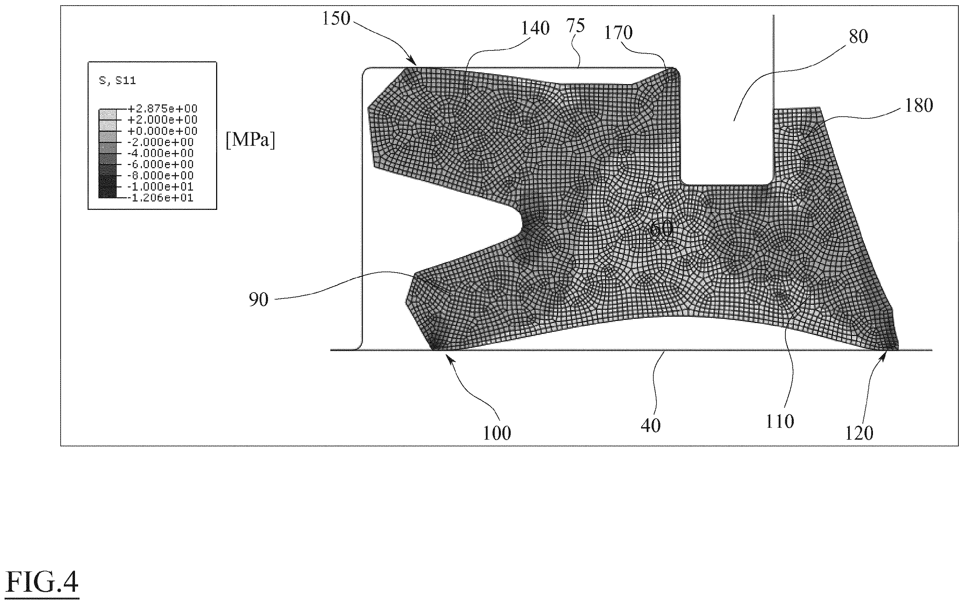

Figure 4 is a graph showing the tensions inside the gasket of figure 3 when it is mounted in the cylinder-piston group and it is not subjected to pressures from inside or outside of the cylinder.

### DETAILED DESCRIPTION

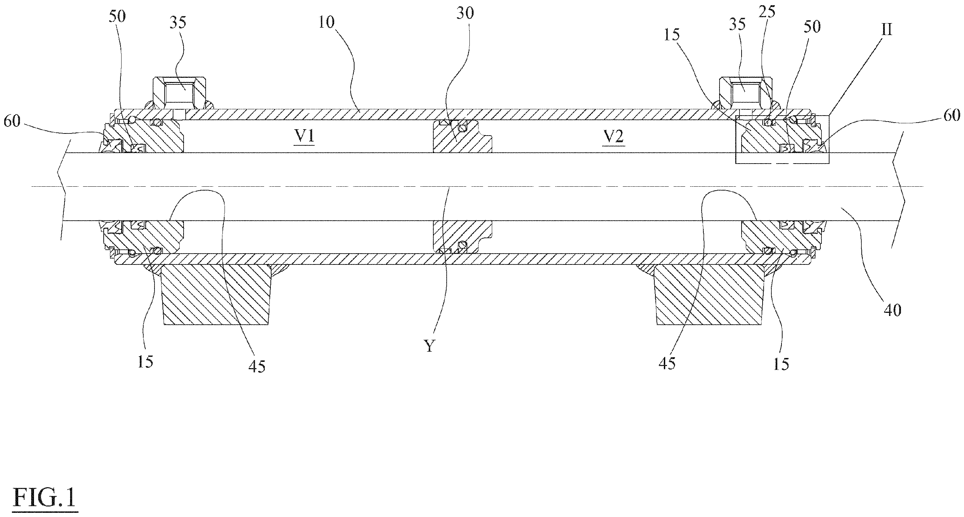

With particular reference to figure 1, a cylinder-piston group, for example of the oil-hydraulic type, has been globally indicated with 1.

The cylinder-piston group 1 comprises a cylinder 10 equipped with a pair of base plates 15 adapted for closing the axial ends of the cylinder 10. For example, the base plates 15 have a portion inserted snugly in the cylinder itself. Every base plate 15 is equipped with an annular groove 20, having concavity facing towards the cylinder 10, in which a static sealing gasket 25 is received interposed between the base plate itself and the cylinder 10.

Inside the cylinder 10 a piston 30 that divides the internal volume of the cylinder 10 into a first chamber V1 and a second chamber V2 filled with a work fluid, for example oil, is slidably received, with respect to a sliding axis Y. The first chamber V1 and the second chamber V2 are selectively placed in communication through a distributor device and a respective duct 35 with a reservoir containing the work fluid at low pressure and a pump adapted for sending the pressurised work fluid to the cylinder 10 (not illustrated).

The cylinder-piston group 1 comprises a stem 40 fixedly connected to the piston 30 and partially slidably received in at least one through opening 45 formed in the cylinder 10, for example in a base plate 15.

Preferably, the stem 40 is of the through type, i.e. it is partially slidably received in an opening 45 formed at an end of the cylinder 10 and in an opening formed in an opposite end of the cylinder 10.

In the illustrated embodiment, the openings are formed in the base plates 15. The cylinder-piston group 1 comprises a dynamic sealing gasket 50 that sealably surrounds the stem 40 and is housed in an annular recess 55 formed in the cylinder 10, for example in the base plate 15 at the opening 45. The cylinder-piston group 1 also comprises a scraping gasket 60 housed in an annular recess 65 formed in the base plate 15 at the opening 45.

The recess 65 of the scraping gasket 60 is positioned outside of the recess 55 of the dynamic sealing gasket 50, i.e. it is closer to the outside of the recess 55 of the dynamic sealing gasket 50.

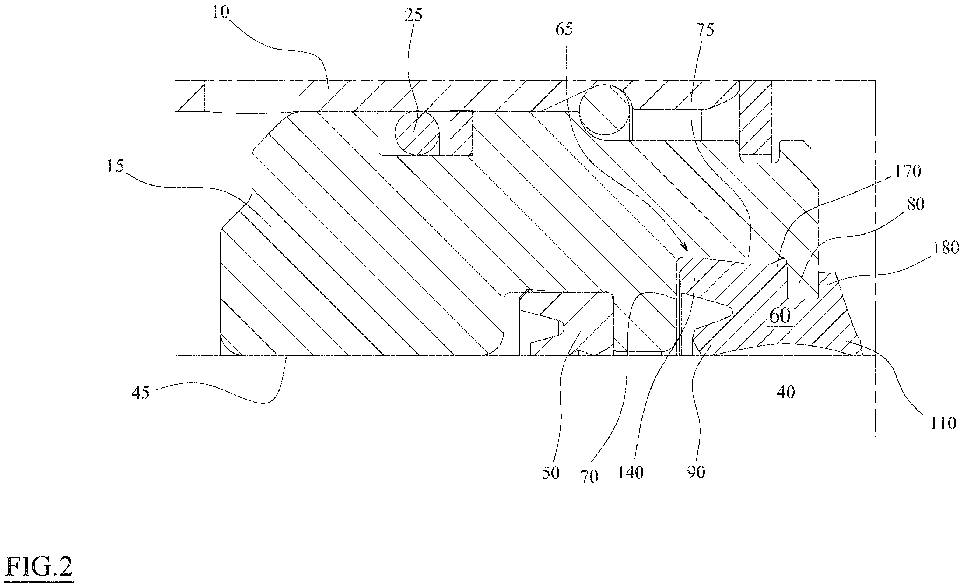

With particular reference to figure 2, the recess 65 is defined by an annular side wall 70, lying on a plane substantially perpendicular to the axis of the stem 40, a cylindrical bottom wall 75 coaxial to the stem 40, which extends axially from the side wall 70 towards the outside of the cylinder 10, and a step 80 arranged between an internal volume of the recess 65 and the outside.

In practice, the step 80 rises up from the bottom wall 75 of the recess 65. Said step 80 comprises a cylindrical surface 85 concentric to the stem 40, the diameter of which is greater than the diameter of the opening 45.

For example, the step 80 has a height, i.e. an extension in the radial direction from the bottom wall 75, comprised between 1.5 and 4 mm, preferably 2.5 mm.

The recess 65 has a depth in the radial direction, i.e. a distance between the stem 40 and the bottom wall 75, comprised between 5 and 8 mm, preferably 6.5 mm.

Moreover, the recess 65, i.e. the bottom wall 75, has extension in the axial direction comprised between 10 and 6 mm, preferably 7 mm.

The scraping gasket 60 housed in the recess 65 comprises an annular first lip 90 that faces towards the inside of the cylinder 10 and sealably surrounds the stem 40.

The first lip 90 comprises an end portion 95 that is in contact with the stem 40 along a cylindrical contact surface 100, which has a length, in the axial direction of the stem 40, comprised between 0.10 and 0.60 mm.

The first lip 90 exerts a maximum pressure comprised between 8 and 14 Mpa on such a contact surface 100.

It should be specified that in this description the values of the contact surfaces and of the contact pressures are meant in the condition in which the scraping gasket 60 is housed in the respective recess 65 of the cylinder 10 and there is no pressure difference between the outside of the cylinder 10 and an internal volume of the cylinder 10 comprised between the scraping gasket 60 and the dynamic seal 50.

The end portion 95 of the first lip 90 also comprises an annular surface 105, which does not contact the stem 40, is adjacent to the contact surface 100 and faces towards the inside of the cylinder 10.

Such an annular surface 105 has a substantially rectilinear cross section profile, for example defining an acute angle α with concavity facing towards the inside of the cylinder 10 with the longitudinal axis of the stem 40.

The angle α is comprised between 40° and 80°, preferably 60°.

The annular surface 105 is preferably made through turning.

It should be specified that in this description, unless specified otherwise, the term cross section means one of the two halves, symmetrical with respect to the axis of the stem 40, of the cross section defined by a plane on which the axis of the stem 40 lies (see figure 1 for an example of such a simplification). The scraping gasket 60 comprises an annular second lip 110 that faces towards the outside of the cylinder 10 and sealably surrounds the stem 40. Preferably, the second lip 110 projects, at least in part, axially with respect to the step 80.

The second lip 110 comprises an end portion 115 that is in contact with the stem 40 along a cylindrical contact surface 120, which has a length, in the axial direction of the stem 40, comprised between 0.15 and 0.5 mm and on which the second lip 110 exerts a maximum pressure comprised between 8M Pa and 14 MPa.

In particular, the second lip 110 is configured so that the pressure exerted on the contact surface 120 is not uniform.

Specifically, such a pressure has a monotonous increasing trend going from the outer axial end of the contact surface 120 towards the inside of the cylinder 10, until the maximum pressure value is reached, to then go down again. The maximum pressure value is obtained in a portion of the contact surface 120 closer to the axial end of the contact surface 120 facing towards the inside of the cylinder 10 with respect to the opposite axial end.

The end portion 115 of the second lip 110 comprises a first annular surface 125, which does not contact the stem 40, is adjacent to the contact surface 120 and faces towards the outside.

The first annular surface 125 has a rounded cross section profile, for example having a joining radius comprised between 0.02 and 0.15 mm.

The end portion 115 also comprises a second annular surface 130 adjacent to the first annular surface 125 on the opposite end with respect to the contact surface 120.

The second annular surface 130 has a rectilinear cross section profile, and for example forms an obtuse angle β, the concavity of which faces towards the outside, with the axis of the stem 40.

The angle β is comprised between 90° and 110°, preferably 100°.

The scraping gasket 60 comprises an annular joining surface 135 that connects the contact surface 100 of the first lip 90 to the contact surface 120 of the second lip 110.

Such an annular joining surface 135 has a cross section defining a concavity facing towards the stem 40.

For example, the maximum distance between the annular joining surface 135 and the stem 40 is comprised between 0,3 mm and 0,5 mm, preferably 0.4 mm.

The scraping gasket 60 comprises a third annular lip 140 that faces towards the inside of the cylinder 10 and has an end portion 145 that contacts the bottom wall 75 of the recess 65, for example close to the side wall 70. Preferably, the end portion 145 projects axially towards the inside of the cylinder 10 with respect to the end portion 95 of the first lip 90.

The end portion 145 is in contact with the bottom wall 75 along a cylindrical contact surface 150, which for example has an axial extension comprised between 0.2 and 0.5 mm.

The third lip 140 is configured to exert a pressure along the contact surface 150 equal to 4-6MPa.

Moreover, the end portion 145 comprises an annular surface 160, adjacent to the contact surface 150 and facing towards the side wall 70 of the recess 65. The annular surface 160 has a substantially rectilinear cross section profile, for example forming an acute angle γ facing towards the side wall 70 with the profile of the cross section of the bottom wall.

The angle γ is comprised between 20° and 40°, preferably 30°.

The annular surface 160 is preferably made through turning.

In this way, increasing the precision of construction of the surface with respect to the case in which it is not made by turning improves the sealing capacity of the third lip 90.

The first lip 90 and the third lip 140 are connected through an annular joining surface 165 shaped like a throat between said lips.

The scraping gasket 60 comprises a fourth annular lip 170 that faces towards the outside of the cylinder 10 and has an end portion 171 that contacts the bottom wall 75 of the recess 65, for example close to the step 80.

The end portion 171 is in contact along a contact surface 172 with an edge comprised between the bottom wall 75 and the step 80.

Moreover, the end portion 171 comprises an annular surface 173, adjacent to the contact surface 172 and facing towards the side wall 70 of the recess 65. The annular surface 173 has a substantially rectilinear cross section profile that forms an angle δ comprised between 15° and 30°, preferably 23°, with the profile of the cross section of the bottom wall 75.

The fourth lip 171 comprises an annular abutment surface 175, which is adjacent to the contact surface 171 on the opposite side with respect to the annular surface 173 and is adapted for overlapping (in contact) with the surface of the step 80 facing towards the inside of the cylinder 10.

For example, the abutment surface 175 has extension in the radial direction equal to the extension in the radial direction of the step 80.

The scraping gasket 60 comprises an annular joining surface 174 that connects the annular surface 160 of the third lip 140 to the annular surface 173 of the fourth lip 170.

Such an annular joining surface 174 has cross section of complex shape, globally defining a concavity facing towards the bottom wall 75 of the recess 65.

For example, the maximum distance between the annular joining surface 174 and the bottom wall 75 is comprised between 0.18 and 0.28 mm, preferably 0.23 mm.

The scraping gasket 60 comprises a fifth lip 180, which comprises an annular end portion 185 that contacts a portion of an outer surface of the step 80. For example, the maximum distance in the radial direction between the cylindrical surface 85 of the step 80 and the end portion 185 is greater than one third of the radial extension of the step 80.

Preferably, said maximum distance is greater than half of the radial extension of the step 80.

Specifically, the maximum distance is comprised between 0.5 mm and 2 mm, preferably 1 mm.

The fifth lip 180 contacts, for example wraps around, at least one outer edge of the step 80.

The fifth lip 180 comprises an annular surface 190, the cross section of which has a profile equipped with a first end in contact with the outer surface of the step 80 and a second end distal from the step 80.

For example, the distance in the axial direction between the first end and the second end of the annular surface 190 is comprised between 0.40 and 2.5 times the extension in the radial direction of the step 80.

In practice, the distance in the axial direction between the first end and the second end of the annular surface 190 is comprised between 0.40 mm and 3.5 mm, preferably 2 mm.

For example, the cross section of the annular surface 190 has a rectilinear profile, preferably inclined by an angle comprised between 80° and 100° with respect to the outer surface of the step 80.

The cross section of the scraping gasket 60 according to a plane perpendicular to the axis of the stem 40 and passing through the second end of the annular surface 190, is a single full circular crown, preferably made of a single material.

Moreover, the fifth lip 180 comprises an annular abutment surface 195 that overlaps in contact with an annular outer surface of the step 80.

Said annular outer surface of the step 80 is the portion of surface of the step 80 comprised between the outer edge of the step itself and the end portion 185 of the fifth lip 180, i.e. of the first end of the annular surface 190.

The scraping gasket 60 comprises a joining surface 200, which extends from the end portion 185 of the fifth lip 180 to the end portion 115 of the second lip 110.

In practice, the joining surface 200 extends from the second end of the annular surface 190 to the annular surface 130 of the second lip 110.

The cross section of the scraping gasket 60 according to a plane perpendicular to the axis of the stem 40 and passing through any point of the cross section of the joining surface 200 is a single full circular crown, preferably made of a single material.

In practice, every cross section of the scraping gasket 60 according to a plane perpendicular to the axis of the stem 40 and passing through any point of the scraping gasket that is axially external with respect to an inner edge of the step 80 is a single full circular crown, preferably made of a single material.

The scraping gasket 60 also comprises an annular connection surface 205, which overlaps in contact with the cylindrical surface 85 of the step 80.

The connection surface 205 extends from the fourth lip 171 to the fifth lip 185, i.e. from the abutment surface 175 of the fourth lip 171 to the abutment surface 195 of the fifth lip 185

Preferably, the second abutment surface 205 has a rectilinear cross section profile, for example having extension in the axial direction greater than the extension in the same direction of the step 80.

The scraping gasket 60 is preferably made of polyurethane.

For example, the gasket 60 is monolithic, i.e. made in a single piece and a single material.

The operation of the cylinder-piston group 1 according to the invention is as follows.

When the pressurised oil is sent by the pump to the cylinder 10 through the suitable duct 35, for example in the chamber V1, the pressure exerted by the fluid sets the piston 30 and with it the stem 40 in translation.

In particular, during such translation, a portion of the stem 40 comes out from the chamber V2 towards the outside and a thin film of oil clinging to the stem 40 comes out through the dynamic sealing gasket 50.

When such a film of oil is carried with the stem 40 through the scraping gasket 60, the first lip 90 reduces the height of the film of oil and the remaining film crosses the second lip 110.

Thereafter, by inverting the chamber of the cylinder 10 in which the pressurised fluid is sent, the portion of stem 40 that had previously comes out translates towards the inside of the cylinder 10 carrying with it the film of oil that had come out and the contaminating agents deposited on it.

Thanks to the pressure exerted by the second lip 110 on the contact surface 120, and to its configuration, the contaminating agents are scraped from the stem 40 whereas the film of oil that had come out re-enters through the scraping gasket 60.

The invention thus conceived can undergo numerous modifications and variants all of which are covered by the inventive concept.

Moreover, all of the details can be replaced by other technically equivalent elements.

In practice, the materials used, as well as the contingent shapes and sizes, can be whatever according to requirements without for this reason departing from the scope of protection of the following claims.

## Claims

1. A cylinder-piston group (1) comprising:
- a cylinder (10) and a piston (30) slidably received in the cylinder (10),
- a stem (40) fixedly connected to the piston (30) and slidably received in an opening (45) of the cylinder (10),
- a scraping gasket (60), which is housed in a recess (65) formed in the cylinder (10) at the opening (45) and comprises two lips (90,110), a first lip (90) of which faces towards the inside of the cylinder (10) and a second lip (110) of which faces towards the outside of the cylinder (10), each of which sealably surrounds the stem (40) and is equipped with an end portion (95,115) in contact with the stem (40) along a cylindrical contact surface (100,120),
**characterised in that** the contact surface (120) of the second lip (110) of said scraping gasket (60) has a length, in the axial direction of the stem (40), comprised between 0.15 and 0.50 mm.

2. The cylinder-piston group (1) according to claim 1, wherein the second lip (110) of the scraping gasket (60) is configured so as to exert a pressure on the contact surface (120) comprised between 8 and 14 MPa.

3. The cylinder-piston group (1) according to claim 2, wherein the second lip (110) is configured so as to exert on the contact surface (120) a non-uniform pressure, the maximum value of which is localised in a segment closer to the axial end of the contact surface (120) facing towards the inside of the cylinder (10) with respect to the opposite axial end.

4. The cylinder-piston group (1) according to claim 1, wherein the end portion (115) of the second lip (110) comprises an annular surface (125) adjacent to the contact surface (120) and facing towards the outside, which has a rounded cross section profile.

5. The cylinder-piston group (1) according to claim 1, wherein the cylinder (10) comprises a step (80), arranged between the recess (65) and the outside, equipped with a cylindrical surface (85) concentric to the stem (40), and wherein the scraping gasket (60) has an abutment surface (205) adapted for contacting the cylindrical surface (85) of the step (80).

6. The cylinder-piston group (1) according to claim 5, wherein the cross section of the scraping gasket (60) according to a plane perpendicular to the axis of the stem (40) and passing through an end of the step (80) facing towards the outside, is a single full circular crown.

7. The cylinder-piston group (1) according to claim 1, wherein the end portion (95) of the first lip (90) comprises an annular surface (105), adjacent to the contact surface (100) and facing towards the inside of the cylinder (10), which has a substantially rectilinear cross section profile that forms an angle (α) comprised between 40° and 80° with the longitudinal axis of the stem (40).

8. The cylinder-piston group (1) according to claim 7, wherein the annular surface (105) of the first lip (90) is made through turning.

9. The cylinder-piston group (1) according to claim 1, wherein the contact surface (100) with the stem (40) of the first lip (90) has a length, in the axial direction of the stem (40), comprised between 0.10 and 0.60 mm and wherein said first lip (90) is configured so as to exert a pressure on the contact surface (100) comprised between 8 and 14 MPa.

10. The cylinder-piston group (1) according to claim 1, wherein the scraping gasket (60) comprises a third lip (140) equipped with an end (145) arranged in contact with a bottom wall (75) of the housing recess (65).

11. The cylinder-piston group (1) according to claim 5, wherein the scraping gasket (60) comprises a fourth lip (170) equipped with an end (171) arranged in contact with a surface of the step (80) facing towards the inside of the cylinder (10).

12. The cylinder-piston group (1) according to claim 5, wherein the scraping gasket (60) comprises a fifth lip (180), which comprises an end portion (185) that contacts an outer surface of the step (80) and that is joined through a connection surface (200) to the end portion (115) of the second lip 110.
